Europäisches Patentamt

(19) European Patent Office

Office européen des brevets

(11) Publication number : **0 414 290 B1**

# (12) EUROPEAN PATENT SPECIFICATION

(45) Date of publication of patent specification :
**22.09.93 Bulletin 93/38**

(51) Int. Cl.[5] : **A23L 1/38**

(21) Application number : **90202045.2**

(22) Date of filing : **26.07.90**

(54) **Food composition.**

(30) Priority : **15.08.89 EP 89202083**

(43) Date of publication of application :
**27.02.91 Bulletin 91/09**

(45) Publication of the grant of the patent :
**22.09.93 Bulletin 93/38**

(84) Designated Contracting States :
**AT BE CH DE DK ES FR GB GR IT LI NL SE**

(56) References cited :
**EP-A- 0 273 475**
**DE-A- 1 692 756**
**DE-A- 2 409 623**
**GB-A- 1 306 666**
**US-A- 3 671 267**
**PATENT ABSTRACTS OF JAPAN vol. 7, no.
135 (C-170)(1280), 11 June 1983 ; &
JP-A-5847464 (YAMAHO K.K.) 19.03.1983**

(73) Proprietor : **UNILEVER N.V.**
**Weena 455**
**NL-3013 AL Rotterdam (NL)**
(84) **BE CH DE DK ES FR GR IT LI NL SE AT**
Proprietor : **UNILEVER PLC**
**Unilever House Blackfriars P.O. Box 68**
**London EC4P 4BQ (GB)**
(84) **GB**

(72) Inventor : **van Rooijen, Adrianus**
**Garnaal 22**
**NL-3225 AG Hellevoetsluis (NL)**

(74) Representative : **Ford, Michael Frederick et al**
**MEWBURN ELLIS 2 Cursitor Street**
**London EC4A 1BQ (GB)**

EP 0 414 290 B1

Jouve, 18, rue Saint-Denis, 75001 PARIS

## Description

The present invention relates to a particulate food composition, which can be used as a foodstuff or, preferably, as an ingredient for a foodstuff.

It has been proposed in German Patent Application DE-B-2,409,623 (C.M.Loeb) to provide a particulate, ground peanut butter product of which at least 75% has a particle size of about 250 microns and the remainder comprises a fatty carrier material of arachide oil. The particulate composition is obtained by cooling peanuts to a temperature of at least about -20°C and then passing them through an impact mill. The final product, however, has the consistency of peanut butter, although it is less "dense" than the normally produced peanut butter.

In British Patent Specification GB-A-1,306,666 (Quaker Oats Co.) a breakfast cereal product is described which is impregnated with a non-heat-degraded, liquefied peanut butter. This product is obtained by first providing an expanded cereal base material, which is dried to a moisture content below 14 wt.% and which is subsequently coated with a mixture of peanut butter and edible oil (optionally containing an antioxidant). The coated and impregnated product is finally dried to a moisture content of 1-5 wt.%. However, this product cannot be used as a base material for the manufacture of peanut butter-based sauces but constitutes a ready product in itself. The weight ratio of cereal base to peanut butter in the Example is 85:15, clearly pointing to a coated and flavoured final product, the major part of which is a cereal base.

Finally, in Japanese Patent Application JP-A-58047464 (Yamaho KK) a seasoning agent has been described in which 45-65 wt.% of enzymatically hydrolyzed starch (D.E. from 7 to 12) is added to 100 parts of a pasty seasoning agent containing 30-80 wt.% of fat or oil, the total water content of the final seasoning agent being from 30-55 wt.%. In one Example, peanut butter is first diluted by adding 30 wt.% of water and subsequently this peanut butter is mixed in a weight ratio of 1:1 with maltodextrin (DE = 8) containing 40 wt.% of water, to give a seasoning agent in which the total water content is 35 wt.%. If the final seasoning agent is allowed to stand, the fat or oil separates off again unless a gelling agent, like agar, is added. From the fact that the coating needs to be dried it can be concluded that, prior to drying, the seasoning agent is a pasty mass instead of a free-flowing, particulate product.

Up till now, no free-flowing, particulate products based on peanut butter were commercially available, although especially for catering purposes such products would be welcome, particularly for the manufacture of peanut butter-based sauces for meat dishes and meals.

It is an object of the present invention to provide a particulate, preferably free-flowing, peanut butter-based product, which, for example, can be used as an ingredient for instant oriental sauces, like sateh sauce.

Throughout this specification and the attached claims, by "peanut butter" is understood the cohesive, comminuted food product prepared from clean, sound, shelled peanuts by grinding roasted peanut kernels from which the seed coats, but not necessarily the skins, have been removed.

The present invention therefore relates to a particulate food composition comprising peanut butter and from 5 to 35% by weight of an expanded, at least partially gelatinized starch material.

Such expanded starch materials have been described in European Patent Application EP-A-0,273,475 and in German Patent DE-A-3,206,751 (Südstärke GmbH) and are marketed under the trade-name Aero-Myl, but similar material may also be obtained by puffing or drum-drying of starchy material.

A particularly useful process of preparing the expanded, at least partially gelatinized starch material involves the extrusion of starch at a high pressure and elevated temperature. Suitable starch materials to be expanded are, for instance, wheat flour, corn flour, rice flour, tapioca starch, potato starch and rice starch.

The particulate, preferably free-flowing, food composition comprises from 5 to 35%, preferably from 10 to 25%, by weight of the expanded, at least partially gelatinized starch material.

The particulate food composition may also comprise other additives, like herbs; spices; flavouring agents; colouring agents; emulsifiers (like fatty acid monoglycerides); antioxidants; vegetables; fruits; dairy products (like cheese); meat of mammals, poultry and fish; animal, vegetable and fungal protein; animal, vegetable and synthetic oils and fats or fat fractions; low-calorie fat replacers, and mixtures of these additives. Generally, amounts up to 10% by weight of the final particulate food composition are used, but sometimes this amount may be higher. The additives should, however, be selected and used in amounts such that the free-flowing characteristics of the particulate food compositions are not impaired.

As the low-calorie fat replacer may be used : the edible polyesters of polyhydric alcohols having at least 4 free hydroxyl groups, such as polyglycerols, sugars or sugar alcohols, at least 70% of the hydroxyl groups on an average being esterified with saturated or unsaturated, straight or branched alkyl chain $C_8$-$C_{24}$ fatty acids; fatty alkyl ether derivatives of glycerol; esters of $C_8$-$C_{24}$ fatty alcohols and polycarboxylic acids; waxes; microcrystalline cellulose, or mixtures thereof.

The products according to the present invention may be used as such or, for example, as ingredients for instant sauces or dressings, particularly oriental sauces, like sateh sauce.

2

The invention therefore also relates to foodstuffs which at least partially consist of a particulate food composition according to the present invention.

In a process of preparing the particulate food composition according to the present invention peanut butter is combined with an amount of a particulate, expanded, at least partially gelatinized starch material such that the final product comprises from 5 to 35% by weight of said starch material.

The particle size range of the particulate food composition according to the present invention may vary, but in general the average maximum dimension is about 4 mm. To a certain extent, the particle size may be adjusted to the environment of the foodstuff in which the particulate food composition according to the invention will be used.

The invention is now illustrated by the following Examples, which are not to be construed as limiting the scope of the present invention.

EXAMPLE I

375 g of peanut butter (ex Calvé, Delft, The Netherlands) was mixed at room temperature (15°C) with 125 g of expanded starch (Aero-Myl 33, ex Südstärke GmbH, Schrobenhausen, West Germany; bulk weight about 100 kg/m³) in a Hobart mixer (Trade-Mark) with a screen stirrer for 2-3 minutes.

A loose, free-flowing material based on peanut butter was obtained, which could be used as a base material for an oriental sauce.

To this purpose the following particulate ingredients were mixed :

| Material based on peanut butter | 55.8 wt.% |
|---|---|
| Coffee creamer | 15.7 wt.% |
| Native starch | 9.4 wt.% |
| Sugar | 9.4 wt.% |
| Flavouring agent | 4.7 wt.% |
| Herbs and spices | 4.5 wt.% |
| Colouring agent | 0.5 wt.% |
| | 100.0 wt.% |

A free-flowing, oriental sauce composition was obtained, which could readily be reconstituted with hot water into a smooth, creamy sauce.

EXAMPLE II

800 g of a commercially available peanut-based sateh sauce (ex Calvé, Delft, The Netherlands) was mixed for 3 minutes at room temperature (15°C) with 200 g of an expanded, at least partially gelatinized potato starch, obtained by extrusion, in a Hobart mixer (Trade-Mark), using a screen stirrer.

A loose, free-flowing sateh sauce powder was obtained, which could readily be reconstituted by simmering in boiling water for 5 minutes in a weight ratio of 1 part of the sateh sauce powder and 2 parts of water. An excellent, smooth sateh sauce was obtained.

**Claims**

1. A particulate food composition comprising peanut butter and from 5 to 35% by weight of an expanded, at least partially gelatinized starch material.

2. A particulate food composition according to Claim 1, comprising from 10 to 25% by weight of an expanded, at least partially gelatinized starch material.

3. A particulate food composition according to Claim 1, comprising up to 10% by weight of an additive selected from the group consisting of: herbs; spices; flavouring agents; colouring agents; emulsifiers; anti-

3

oxidants; vegetables; fruits; dairy products; meat of mammals, poultry and fish; animal, vegetable and fungal protein; animal, vegetable and synthetic oils and fats or fat fractions; low-calorie fat replacers, and mixtures thereof.

4. A particulate food composition according to Claim 3, in which the low-calorie fat replacer is selected from the group consisting of: the edible polyesters of polyhydric alcohols having at least 4 free hydroxyl groups, such as polyglycerols, sugars or sugar alcohols, at least 70% of the hydroxyl groups on an average being esterified with saturated or unsaturated, straight or branched alkyl chain $C_8$-$C_{24}$ fatty acids; fatty alkyl ether derivatives of glycerol; esters of $C_8$-$C_{24}$ fatty alcohols and polycarboxylic acids; waxes; microcrystalline cellulose, or mixtures thereof.

5. A foodstuff at least partially consisting of a particulate food composition according to Claims 1-4.

6. A process of preparing a particulate food composition in which peanut butter is combined with an amount of a particulate, expanded, at least partially gelatinized starch material such that the final product comprises from 5 to 35% by weight of said starch material.


## Patentansprüche

1. Teilchenförmige Nahrungsmittelzusammensetzung umfassend Erdnußbutter und 5 bis 35 Gew.-% eines aufgeschäumten, zumindest teilweise gelatinisierten Stärkematerials.

2. Teilchenförmige Nahrungsmittelzusammensetzung gemäß Anspruch 1, umfassend 10 bis 25 Gew.-% eines aufgeschäumten, zumindest teilweise gelatinisierten Stärkematerials.

3. Teilchenförmige Nahrungsmittelzusammensetzung gemäß Anspruch 1, umfassend bis zu 10 Gew.-% eines Zusatzes ausgewählt aus der Gruppe bestehend aus Kräutern; Gewürzen; Geschmacksmitteln; Färbemitteln; Emulgatoren; Antioxidantien; Gemüsen; Früchten; Molkereiprodukten; Säugetierfleisch; Geflügel und Fisch; tierisches, pflanzliches und pilzliches Eiweiß; tierische, pflanzliche und synthetische Öle und Fette oder Fettfraktionen; Fettersatzstoffe mit geringem Kaloriengehalt und Mischungen daraus.

4. Teilchenförmige Nahrungsmittelzusammensetzung gemäß Anspruch 3, in welcher der Fettersatzstoff mit geringem Kaloriengehalt ausgewählt ist aus der Gruppe bestehend aus: den eßbaren Polyestern mehrwertiger Alkohole mit wenigstens 4 freien Hydroxylgruppen, wie Polyglycerine, Zucker oder Zuckeralkohole, wobei zumindest 70 % der Hydroxylgruppen im Durchschnitt verestert sind mit gesättigten oder ungesättigten, unverzweigten oder verzweigten Alkylketten $C_8$-$C_{24}$-Fettsäuren; Fettalkyletherderivaten von Glycerin; Estern von $C_8$-$C_{24}$-Fettalkoholen und Polycarbonsäuren; Wachsen; microkristalline Zellulose oder Mischungen davon.

5. Nahrungsmittel zumindest teilweise bestehend aus einer teilchenförmigen Nahrungsmittelzusammensetzung gemäß den Ansprüchen 1 bis 4.

6. Verfahren zur Herstellung einer teilchenförmigen Nahrungsmittelzusammensetzung, in welcher Erdnußbutter mit einer menge eines teilchenförmigen, aufgeschäumten, zumindest teilweise gelatinisierten Stärkematerials vereinigt ist, so daß das Endprodukt 5 bis 35 Gew.-% des besagten Stärkematerials umfaßt.


## Revendications

1. Une composition de denrées alimentaires en particules comprenant du beurre de cacahouète et de 5 à 35 % en masse d'un matériau d'amidon expansé, au moins partiellement gélatiné.

2. Une composition de denrées alimentaires en particules selon la Revendication 1, comprenant de 10 à 20 % en masse d'un matériau d'amidon expansé, au moins partiellement gélatiné.

3. Une composition de denrées alimentaires en particules selon la Revendication 1, comprenant jusqu'à 10% en masse d'un additif sélectionné à partir du groupe composé des aromates, des épices, des agents de sapidité, des agents colorants, des émulsifiants, des antioxydants, des légumes, des fruits, des produits laitiers, de la viande de mammifères, de volaille et de poisson, des protéines végétales et fongiques, des huiles et matières grasses ou fractions de matière grasse animale, végétales et synthétiques, des remplaçant allégés des matières grasses, et de mélanges de ceux-ci.

4. Une composition de denrées alimentaires en particules selon la Revendication 3, dans laquelle le remplaçant allégé des matières grasses est sélectionné à partir du groupe composé des polyesters comestibles d'alcools polyhydriques ayant au moins 4 groupes hydroxyles libres, tels que les polyglycérols, les sucres et les alcools de sucre, au moins 70 % des groupes hydroxyles en moyenne étant estérifiés avec des acides gras en $C_8$ - $C_{24}$ saturés ou insaturés, en chaîne droite ou ramifiée ; des dérivés d'éther d'alkyl gras et de glycérol ; des esters d'alcools gras en $C_8$ - $C_{24}$ et des acides polycarboxyliques ; des cires ; de la cellulose micro-cristalline ou des mélanges de ceux-ci.

5. Un produit alimentaire au moins partiellement composé d'une composition de denrées alimentaires en particules selon les Revendications 1 à 4.

6. Un procédé de préparation d'une composition de denrées alimentaires en particules dans lequel le beurre de cacahouète est combiné avec une quantité de matériau d'amidon en particules, expansé, au moins partiellement gélatiné, de telle sorte que le produit final comprennent de 5 à 35 % en masse dudit matériau d'amidon.